# FASCICULE DE BREVET EUROPEEN

(11) **EP 2 143 988 B1**
(45) Date de publication et mention de la délivrance du brevet: **17.08.2011**
(21) Numéro de dépôt: 09164067.2
(22) Date de dépôt: 29.06.2009
(51) Int. Cl.: F17C 13/08

(54) **Système de stockage de liquide cryogénique pour engin spatial**
Speichersystem für kryogene Flüssigkeit in einem Weltraumgefährt
Cryogenic liquid storage system for space vehicle

(30) Priorité: 04.07.2008 FR 0854569
(43) Date de publication de la demande: 13.01.2010
(73) Titulaire: SNECMA, 75015 Paris (FR)
(72) Inventeur: Valentian, Dominique, 78710 Rosny sur Seine (FR)
(74) Mandataire: Thévenet, Jean-Bruno

(56) Documents cités:
- EP-A- 0 042 784
- EP-A- 0 625 672
- WO-A-2007/004248
- WO-A-2007/031064
- US-A- 3 347 056
- US-A- 5 263 329
- US-A- 5 901 557

## Description

### Domaine de l'invention

La présente invention a pour objet un système de stockage de liquide cryogénique pour engin spatial comprenant au moins un réservoir de liquide.

### Art antérieur

On connaît déjà des réservoirs spatiaux de stockage d'hélium liquide superfluide utilisé pour refroidir des détecteurs et des télescopes de satellites d'astronomie infrarouge.

Toutefois, la masse de l'isolation nécessaire pour un tel type de réservoir est très importante et rend difficile une application à la propulsion.

Par ailleurs, l'utilisation de l'hydrogène et de l'oxygène liquide pour des missions orbitales terrestres ou des missions interplanétaires a été analysée depuis de nombreuses années, en particulier aux Etats-Unis d'Amérique. Il faut réaliser une séparation de phase liquide/vapeur en microgravité qui utilise les mêmes principes que les réservoirs à tension de surface pour satellites. L'isolation thermique est plus simple et plus légère que dans le cas de réservoirs à hélium liquide.

Un exemple de réalisation d'un réservoir de ce type a été décrit dans le document EP 1 248 031 A2 pour le stockage d'hydrogène liquide ou d'oxygène liquide sous accélération ou en phase balistique pour des missions de faible durée dans des lanceurs. Il n'est cependant pas prévu d'utilisation pour des missions interplanétaires de longue durée.

On connaît encore des satellites de télécommunications équipés de propulseurs plasmiques ou ioniques alimentés par du xénon qui est stocké à l'état supercritique dans des réservoirs haute pression, généralement à coque en titane avec un surbobinage en fibres de carbone.

L'objectif de réduction de l'encombrement, donc d'augmentation de la densité de fluide supercritique (1,4 à 1,7), conduit à une pression de service maximale élevée (15 à 19 MPa), et par suite à des réservoirs assez lourds dont la masse correspond à 10 à 13 % de la masse de xénon stocké.

Les systèmes actuels de ce type réalisent uniquement le contrôle nord-sud des satellites géostationnaires. Si une partie du transfert d'orbite était aussi effectuée en propulsion électrique, la masse pourrait être doublée. Pour une telle application, il serait donc souhaitable de pouvoir réduire la masse sèche et le volume des réservoirs.

La NASA a par ailleurs préparé une mission interplanétaire en propulsion électrique : la mission Dawn qui est une mission vers la ceinture d'astéroïdes reposant sur l'utilisation de propulseurs ioniques alimentés en xénon. La masse sèche du système de propulsion de Dawn est de 129 kg. Le réservoir a une masse de 21,6 kg et contient 425 kg de xénon. Ce pourcentage relativement réduit (5,1 %) est obtenu au prix d'une technologie très délicate. La température est limitée à 30°C au lieu de 50°C sur les satellites de télécommunications et la pression maximale est de 8,4 MPa. Le diamètre du réservoir (90 cm) dicte le diamètre du tube central de la sonde Dawn. Le système de détente pèse 18,5 kg (platines, réservoirs tampon et composants haute pression) sans l'électronique de pilotage (2,5 kg).

On constate ainsi que la fonction de stockage et de distribution du xénon représente 33 % de l'ensemble de la masse sèche, ce qui n'est pas négligeable pour une mission interplanétaire où les performances sont fortement améliorées si la masse sèche du sous-système est réduite.

D'une manière générale, les systèmes équipés de propulseurs plasmiques ou ioniques alimentés par du xénon stocké à l'état supercritique dans des réservoirs haute pression présentent les inconvénients suivants :
- le pourcentage de masse sèche du stockage est plus élevé que dans le cas de la propulsion chimique ;
- il faut intercaler des vannes haute pression et un détendeur entre le réservoir et les propulseurs, ce qui introduit un supplément de masse et rend la fiabilité un peu plus faible du fait de l'augmentation du nombre de composants ;
- le coefficient de sécurité du réservoir est en général trop faible pour autoriser sans restriction la présence de personnel après le remplissage.

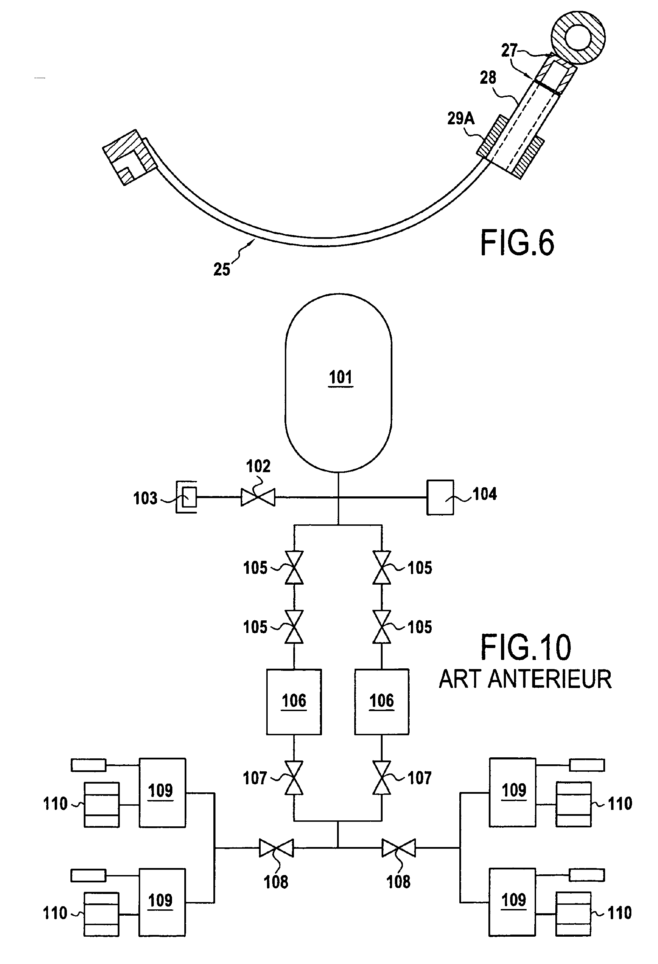

La figure 10 montre schématiquement un exemple de réalisation de l'art antérieur avec un système de propulsion comprenant quatre propulseurs plasmiques ou ioniques 110 avec cathode creuse équipés chacun d'un module 109 de contrôle de débit de xénon comprenant un ensemble de vannes et d'organes de régulation. Le xénon (ou le cas échéant du krypton supercritique) est stocké dans un réservoir 101 de xénon sous haute pression. Une vanne 102 de remplissage/vidange permet le remplissage ou la vidange du réservoir 101 à partir d'un orifice 103 de remplissage/vidange.

Un capteur haute pression 104 est associé au réservoir 101. Deux branches redondantes relient le réservoir 101 aux modules de contrôle de débit de xénon 109. Chaque branche comprend deux vannes pyrotechniques haute pression 105 en série, un détendeur électronique 106, une vanne pyrotechnique basse pression 107 et une vanne bistable 108.

On connaît encore par le document EP-A-0 625 672 ,considéré comme résultant l'art antérieur le plus proche, un système de gestion de fluides dans un système de stockage cryogénique en apesanteur.

### Définition et objet de l'invention

La présente invention vise à remédier aux inconvénients des systèmes précités de l'art antérieur.

L'invention vise en particulier à diminuer l'indice structural des réservoirs et des systèmes fluides associés et à améliorer le coefficient de sécurité en pression de manière à permettre la présence de personnel sans restriction après le remplissage d'un réservoir.

Ces buts sont atteints, conformément à l'invention, grâce à un système de stockage de liquide cryogénique pour engin spatial comprenant au moins un réservoir de liquide, caractérisé en ce qu'il comprend une enveloppe externe, un espace sous vide ménagé entre le réservoir et l'enveloppe externe, un dispositif d'acquisition de liquide, en matériau bon conducteur de la chaleur et refroidi par un cryoréfrigérateur pour localiser le liquide en microgravité à l'intérieur du réservoir, une canalisation de remplissage située en partie inférieure du réservoir lorsque celui-ci est au sol, et entourée d'une double paroi d'isolation sous vide et une canalisation de purge reliant le réservoir à l'enveloppe externe, dont la longueur est au moins égale à la moitié du diamètre du réservoir.

Le système comprend des moyens de maintien du réservoir dans l'enveloppe externe, ces moyens de maintien, présentant une faible conductivité thermique et étant écartés angulairement de 30° à 120° par rapport au dispositif d'acquisition de liquide, refroidi par le cryoréfrigérateur.

Selon un premier mode de réalisation possible, le dispositif d'acquisition de liquide est disposé sur un axe polaire du réservoir et lesdits moyens de maintien comprennent une jupe de fixation en matériau isolant interposée au voisinage d'un plan équatorial entre les réservoirs et l'enveloppe externe.

Selon un autre mode de réalisation possible, le dispositif d'acquisition de liquide en forme de double tronc de cône solidaire d'un anneau refroidi par le cryoréfrigérateur est disposé au voisinage d'un plan équatorial et lesdits moyens de maintien comprennent des organes de fixation mécanique interposés au niveau d'un axe polaire entre le réservoir et l'enveloppe externe.

Avantageusement, le système comprend un matériau super-isolant interposé entre le réservoir et l'enveloppe externe.

De préférence, le réservoir de liquide et l'enveloppe externe sont montés dans un tube central au voisinage du centre de gravité de l'engin spatial.

Selon une caractéristique particulière, le système comprend un soufflet de découplage interposé entre le cryoréfrigérateur et l'enveloppe externe.

Selon un mode de réalisation particulier, le système comprend un évaporateur immergé dans le liquide du réservoir à l'endroit le plus proche du cryoréfrigérateur, lequel évaporateur comprend un matériau poreux et est prolongé par un tube de faible section relié à l'enveloppe externe.

Selon un autre mode de réalisation particulier, le système comprend une canalisation reliant le réservoir à l'enveloppe externe, un tamis interne formant évaporateur de liquide étant incorporé dans ladite canalisation.

Un élément chauffant peut être associé à l'évaporateur.

Selon un mode de réalisation particulier, le système comprend un cryoréfrigérateur comprenant une tête froide intégrée au réservoir au voisinage d'un orifice de puisage, le cryoréfrigérateur étant relié à un radiateur par une boucle de refroidissement.

Selon un autre mode de réalisation particulier, le système comprend un cryoréfrigérateur monté directement sur un radiateur et relié au réservoir par un caloduc cryogénique.

Le cryoréfrigérateur peut être du type stirling ou du type tube à gaz pulsé.

Selon un autre mode de réalisation possible, le système comprend un cryoréfrigérateur du type Joule Thomson avec un étage de détente disposé dans le réservoir et un compresseur déporté sur un radiateur de refroidissement.

Selon une première application possible du système selon l'invention, le liquide cryogénique stocké dans le réservoir est un gaz inerte liquéfié comprenant le xénon, le krypton, le néon ou l'argon pour l'alimentation de propulseurs électriques, plasmiques ou ioniques à grilles.

Selon une autre application possible du système selon l'invention, le liquide cryogénique stocké dans le réservoir est de l'oxygène liquide.

L'engin spatial auquel est appliqué le système de stockage de liquide cryogénique selon l'invention peut être notamment constitué par un satellite, une sonde automatique ou un véhicule spatial habité.

Le stockage à l'état liquide dans un réservoir d'engin spatial d'un composant tel que le xénon présente plusieurs avantages :
- la densité est plus élevée (3057 kg/m³ au lieu de 1200 à 1600 kg/m³), ce qui implique un volume de réservoir plus faible ;
- le pression de stockage peut être contrôlée de manière à correspondre à la pression d'alimentation des propulseurs, ce qui évite l'utilisation de détendeurs haute pression ;
- il n'y a pas de fluctuation rapide de la pression d'alimentation ;
- la masse du réservoir (en basse pression) est réduite vis-à-vis d'un stockage supercritique ;
- le remplissage du réservoir peut être effectué rapidement, alors que le remplissage d'un réservoir supercritique demande un jour ou plus. Le xénon est en effet un gaz à faible conductibilité thermique de même que la paroi en matériau composite, de sorte que dans le cas d'un réservoir supercritique, un remplissage trop rapide conduit à un échauffement excessif du xénon par compression quasiment adiabatique.

### Brève description des dessins

D'autres caractéristiques et avantages de l'invention ressortiront de la description suivante de modes particuliers de réalisation donnés à titre d'exemples, en référence aux dessins annexés, sur lesquels :
- la figure 1 est une vue schématique d'ensemble d'un système de stockage de liquide selon l'invention adapté à un engin spatial ;
- la figure 2 est une vue schématique en élévation montrant un premier exemple de montage d'un système de stockage de liquide selon l'invention sur une plate-forme d'engin spatial ;
- la figure 3 est une vue schématique en élévation montrant un deuxième exemple de montage d'un système de stockage de liquide selon l'invention sur une plate-forme d'engin spatial ;
- la figure 4 est une vue en coupe axiale d'un exemple de réservoir pouvant être utilisé dans le système de stockage de liquide selon l'invention, la moitié gauche correspondant à un comportement au sol et la partie droite correspondant à un comportement en microgravité ;
- la figure 5 est une vue de détail montrant un exemple de canalisation jouant aussi le rôle d'évaporateur pouvant être utilisé en combinaison avec le réservoir de la figure 4 ;
- la figure 6 est une vue de détail montrant un autre exemple de canalisation avec évaporateur séparé pouvant être utilisé en combinaison avec le réservoir de la figure 4 ;
- les figures 7 et 8 sont des vues schématiques respectivement en coupe équatoriale et en coupe méridienne d'un exemple de réservoir à fixation équatoriale utilisable avec le système de stockage de liquide selon l'invention ;
- la figure 9 est une vue schématique en coupe méridienne d'un exemple de réservoir à fixation polaire utilisable avec le système de stockage de liquide selon l'invention ; et
- la figure 10 est une vue schématique d'ensemble d'un exemple de système de stockage de liquide adapté à un engin spatial, selon un mode particulier de réalisation de l'art antérieur.

### Description détaillée des modes de réalisation préférentiels

L'invention s'applique à des réservoirs de stockage à l'état liquide d'un gaz inerte tel que le xénon, le krypton, le néon ou l'argon, pour l'alimentation de propulseurs électriques, plasmiques ou ioniques pour satellites ou sondes planétaires.

L'invention s'applique aussi au stockage d'ergols cryogéniques tels que l'oxygène liquide dans des engins spatiaux.

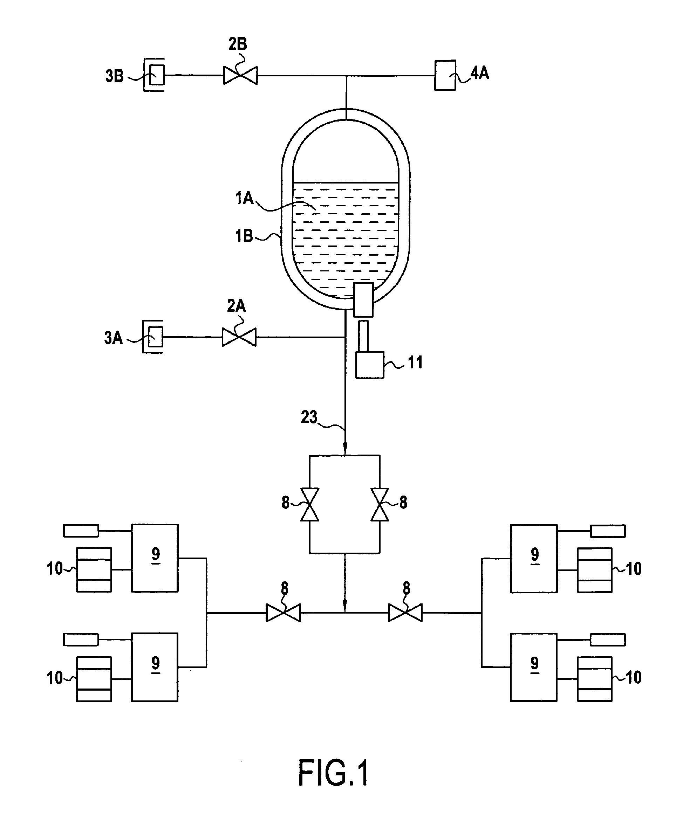

La figure 1 montre un exemple d'application de l'invention à un système de propulsion électrique.

Un réservoir 1A de stockage de liquide cryogénique est contenu à l'intérieur d'une enveloppe externe 1B à l'intérieur de laquelle on fait le vide.

Un cryoréfrigérateur 11 assure le refroidissement du liquide contenu dans le réservoir 1A, ce liquide pouvant être par exemple du xénon, du krypton, du néon ou de l'argon.

La référence 2A désigne une vanne de remplissage/vidange de liquide du réservoir 1A à partir d'un orifice 3A de remplissage/vidange de liquide.

Une vanne 2B permet la purge des vapeurs du réservoir 1A vers un orifice 3B de purge des vapeurs.

Un capteur basse pression 4A permet un contrôle de la pression des vapeurs à l'intérieur du réservoir 1A.

Le réservoir 1A permet, à travers une ligne 23, l'alimentation en gaz inerte de propulseurs plasmiques ou ioniques 10 disposés à l'extérieur du réservoir 1A et de l'enveloppe externe 1B.

Chaque propulseur plasmique ou ionique avec cathode creuse est associé à un module 9 de contrôle du débit de gaz inerte (tel que le xénon). Chaque module de contrôle 9 comprend un ensemble de vannes et d'organes de régulation.

La ligne d'alimentation 23 est reliée aux modules de contrôle 9 par un simple ensemble de vannes bistables 8, deux vannes bistables 8 montées en parallèle de façon redondante et reliées en série à deux vannes bistables 8 reliées elles-mêmes d'une part pour la première à un premier groupe de deux modules de contrôle 9, et d'autre part pour la deuxième à un deuxième groupe de deux modules de contrôle 9.

Un système selon l'invention présente notamment les avantages suivants:
- la densité de stockage de liquide est plus élevée que dans le cas d'une solution à stockage supercritique :
- la masse de l'ensemble réservoir-détendeur est plus faible qu'une solution à stockage supercritique (puisque les vannes pyrotechniques haute pression 105 et le détendeur 106 du système connu de la figure 10 sont supprimés dès lors que le stockage de liquide est effectué à basse pression).
- il n'y a pas de haute pression, donc pas de restriction d'accès pour les opérateurs préparant le lancement ;
- le réservoir peut être facilement modifié en ajoutant une section cylindrique de manière à offrir un volume adapté aux besoins. L'absence de haute pression rend cette modification très facile. Le choix du diamètre du réservoir permet une adaptation simple aux exigences dimensionnelles des plates-formes ;
- il n'y a pas de pics de pression d'alimentation des moteurs comme avec certains détendeurs ;
- la pression d'alimentation des moteurs 10 peut être ajustée par contrôle de la température. Cela permet un fonctionnement en mode dégradé en cas de panne des unités 9 de contrôle et de régulation de débit ;
- les faibles ponts thermiques permettent un arrêt du refroidissement actif pendant plusieurs jours, par exemple suite à une perte de contrôle du satellite et un arrêt de l'alimentation électrique, ou pour attente au sol avant lancement.

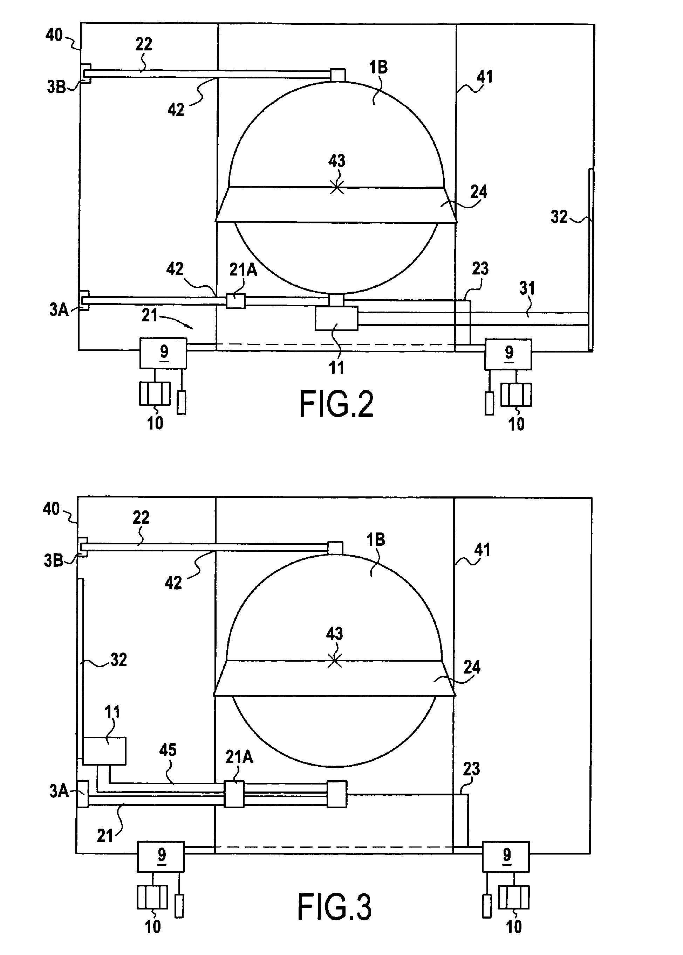

La figure 2 montre un exemple d'intégration d'un réservoir et de son enveloppe externe 1B selon l'invention dans un satellite ou une sonde.

Sur la figure 2, on a représenté une enveloppe externe 1B située au centre d'une plate-forme 40 de telle manière que son centre géométrique soit à proximité du centre de gravité 43 de la plate-forme 40.

L'enveloppe externe 1B, et le réservoir interne non visible sur la figure 2, sont montés dans un tube central 41 de telle sorte que leur centre géométrique soit proche du centre de gravité de l'engin spatial qui comprend la plate-forme 40 ainsi que les propulseurs électriques plasmiques ou ioniques 10 et leurs modules de commande associés 9.

Le tube central 41 comporte des ouvertures 42 permettant le passage d'une ligne 21 de remplissage de liquide cryogénique, à double paroi sous vide, d'une ligne 22 d'évacuation des vapeurs et d'une ligne 23 d'alimentation des propulseurs électriques, plasmiques ou ioniques 10 qui sont externes à l'enveloppe 1B.

La ligne sous vide 21 peut comporter un connecteur 21A qui permet de monter la section de ligne sous vide entre le connecteur 21A et le raccord de remplissage 3A après la fixation du réservoir et de son enveloppe externe 1B dans le tube central 41. Le raccord 21A peut être une bride à joint métallique hermétique ou un raccord soudé à l'aide d'une pince de soudure orbitale.

Le réservoir et son enveloppe externe 1B sont maintenus dans la structure du tube central 41 par un moyen de fixation qui peut être par exemple une jupe conique.

Le réservoir étant placé dans un environnement dont la température est comprise entre 10°C et 40°C pendant une mission, il est essentiel de refroidir le réservoir sous vide. Ceci est obtenu à l'aide d'un cryoréfrigérateur 11 qui peut être par exemple du type stirling ou du type tube à gaz pulsé.

Sur la figure 2, on a représenté un cryoréfrigérateur dont la tête froide est intégrée au réservoir. Un tel cryoréfrigérateur est monobloc, c'est-à-dire que la tête froide et le compresseur d'alimentation forment une seule pièce. Dans ce cas, le compresseur du cryoréfrigérateur est refroidi par un lien thermique 31 lui-même connecté à un radiateur 32 qui rayonne la puissance à dissiper vers l'espace (tandis qu'au sol la convection naturelle complète le rayonnement pour assurer le refroidissement). Le drain thermique 31 peut être un caloduc ou une boucle fluide.

La figure 3 montre une variante de réalisation qui est pour l'essentiel semblable au mode de réalisation de la figure 2 mais dans laquelle le cryoréfrigérateur 11 est déporté vers le radiateur 32. Dans ce cas, la liaison entre le cryoréfrigérateur 11 et le réservoir est effectuée à l'aide d'un caloduc 45 qui peut être logé dans la même ligne sous vide que la ligne de remplissage/vidange 21. Cela permet de coupler thermiquement la ligne 21 au caloduc 45. Le caloduc 45 et la ligne 21 sont introduits par translation dans le raccord 21A avant fermeture de la liaison.

L'isolation sous vide de la ligne de remplissage 21 par exemple avec des raccords du type Johnston permet d'éviter les ponts thermiques pouvant conduire à une ébullition locale (le point d'ébullition du xénon liquide étant à -110°C).

Le fluide évaporé au contact des parois (initialement à température ambiante du réservoir) est récupéré par la ligne 22. Il peut être éventuellement recyclé par refroidissement dans le chariot de remplissage.

Le réservoir 1A étant contenu dans l'enveloppe sous vide 1B, il peut être lui-même mis sous vide avant remplissage. Cela permet d'éviter la contamination par de l'air ou d'autres gaz.

Le remplissage sera effectué quelques jours avant le lancement dans le local de préparation, l'axe de la plate-forme étant vertical. Le réfrigérateur cryogénique 11 permet de compenser les fuites thermiques. S'il n'est pas possible d'alimenter le réfrigérateur après fermeture de la coiffe, les faibles pertes thermiques autorisent une autonomie supérieure à deux jours avant le lancement. La réfrigération active est à nouveau possible dans l'espace dès déploiement des panneaux solaires.

Pour les missions interplanétaires, le xénon doit être maintenu à l'état liquide pendant plusieurs mois au minimum. L'isolation passive du réservoir devient pratiquement infaisable dans ces conditions.

Il faut à la fois diminuer les pertes thermiques (super-isolation sous vide) et refroidir le réservoir. Les cryoréfrigérateurs utilisés pour les missions scientifiques permettent d'obtenir une puissance réfrigérante de plus de 10 W à 100 K. Le réservoir 1A est maintenu en froid par un réfrigérateur 11 de ce type.

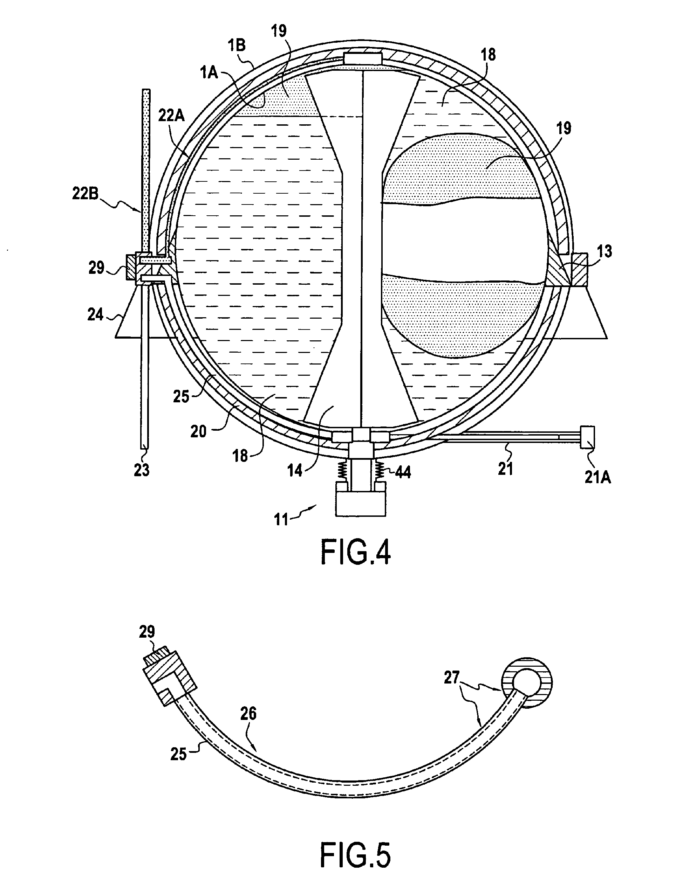

L'isolation thermique sous vide est constituée d'un super-isolant multicouches 20 situé entre le réservoir 1A et l'enveloppe externe 1B permettant de maintenir le vide (voir figure 4).

Le réservoir interne 1A est maintenu à l'intérieur du réservoir externe 1B soit par des biellettes en matériau composite à faible conductivité thermique soit par une jupe 13 constituée du même matériau (figure 4).

Le cryoréfrigérateur 11 est situé de préférence à proximité de l'orifice de puisage (remplissage/vidange), comme représenté sur les figures 2, 4, 8 et 9. Il peut être déporté sur son radiateur 32, ce qui permet d'éliminer la boucle de refroidissement 31, comme représenté sur la figure 3.

Le xénon ou autre gaz inerte mouille les parois du réservoir 1A en microgravité. En supposant que ce dernier soit isotherme, le liquide mouille toutes les parois au moins en début de mission, il n'est donc pas possible d'extraire le gaz par l'orifice supérieur. Pour cela, on utilise un évaporateur 28 immergé à une extrémité dans le liquide (à proximité du cryoréfrigérateur 11, donc à l'endroit le plus froid) et constitué d'un matériau poreux. L'évaporateur est prolongé par un tube de faible section qui permet le passage de la vapeur mais qui est soumis à un gradient de température entre le réservoir interne 1A (isotherme et froid) et le réservoir externe 1B (à température ambiante). L'autre extrémité de l'évaporateur peut recevoir un élément chauffant 29 qui permet d'assurer la vaporisation du liquide à fort débit. Cet élément chauffant est hors circuit en absence de demande de débit (voir les figures 4 et 6).

Même si l'évaporateur 28 est "noyé", il se forme naturellement une interface liquide/vapeur dans le capillaire. Si les vannes d'alimentation des propulseurs sont ouvertes, le ménisque recule jusque dans l'évaporateur 28 qui reprend alors son rôle. Une masse thermique sur la paroi externe assure l'évaporation des gouttelettes de xénon liquide qui auraient pu subsister. Lorsque les vannes sont fermées, le volume de vapeur dans la ligne interdit la pénétration de liquide.

La figure 4 montre en coupe axiale le schéma d'un réservoir, avec dans la moitié gauche le comportement au niveau du sol et dans la moitié droite le comportement en microgravité.

L'espace sous vide entre le réservoir interne 1A et l'enveloppe externe 1B contient un super-isolant 20, une partie de la ligne 21 d'alimentation, une partie interne 22A d'une ligne d'évacuation des vapeurs et la ligne 25 de liaison entre le réservoir interne 1A et l'enveloppe externe 1B, formant évaporateur.

La longueur des lignes 22A et 25, qui est supérieure ou égale au rayon du réservoir 1A, permet un bon découplage thermique avec une minimisation des pertes par conduction. La ligne d'évacuation des vapeurs est prolongée par une ligne externe 22B.

La figure 4 montre la répartition du liquide 18 et de la bulle de vapeur 19 au sein du réservoir 1A.

Comme on l'a déjà indiqué, en référence à la figure 2, le réservoir 1A et son enveloppe externe 1B doivent être montés au voisinage du centre de gravité global 43 de l'engin spatial.

De plus, il est préférable de limiter les variations du centre de gravité du réservoir en fonction de la quantité de gaz inerte liquéfié puisée, en particulier pour simplifier le contrôle d'attitude du satellite ou de la sonde.

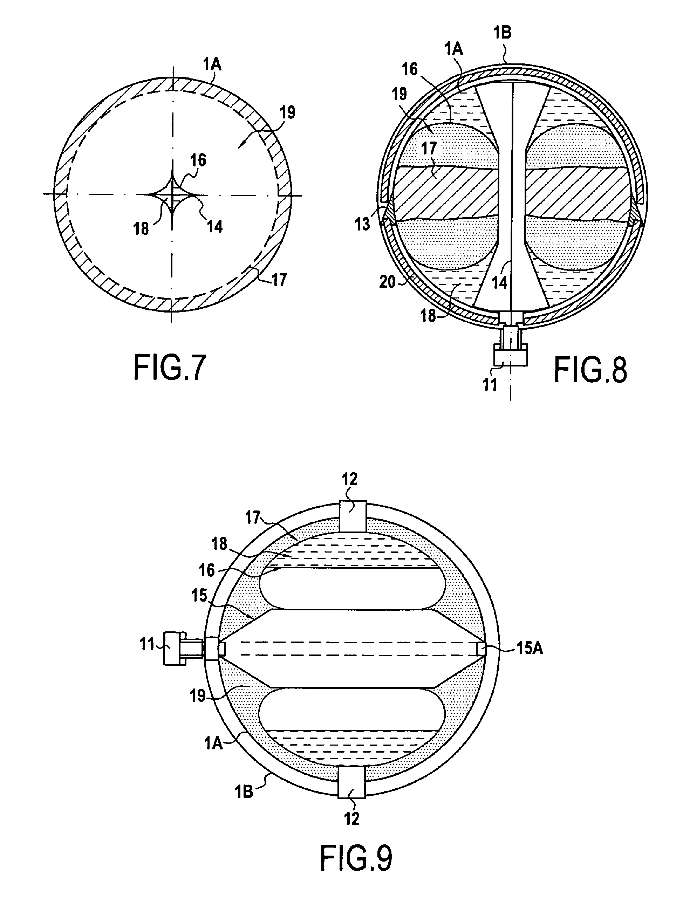

Pour cela, on utilise un dispositif d'acquisition de liquide (DAL) (ou en anglais Propellant Management Device) qui permet le maintien de l'interface liquide-vapeur de manière à centrer la masse de gaz inerte liquéfié sur le centre géométrique du réservoir. Un tel dispositif d'acquisition de liquide peut être formé à partir de lames en forme de croix 14 (figures 4, 7 et 8) ou de jupes coniques 15 (figure 9) placées à l'intérieur du réservoir et qui équipent déjà certains réservoirs à tension superficielle.

Le fonctionnement en équilibre liquide-vapeur implique que le DAL 14, 15 assure une fonction supplémentaire : il doit refroidir le liquide de manière à éviter la formation de bulle de vapeur à sa surface et doit être situé dans la partie la plus froide du réservoir. En effet, le flux thermique passant par les fixations mécaniques entraîne une légère surchauffe qui va conduire à un assèchement local de la paroi lorsque le réservoir est partiellement rempli. Il faut donc monter le DAL 14, 15 perpendiculairement aux fixations mécaniques quand cela est possible. Cela conduit à deux types de solutions.

Les figures 7 et 8 représentent en coupe par l'équateur et coupe méridienne la figure d'équilibre du xénon dans un réservoir 1A à fixation équatoriale 13 en microgravité. La partie la plus chaude du réservoir 1A est située au niveau de l'équateur, donc la partie de cette paroi 17 est en contact direct avec la vapeur et sèche. Un DAL en forme de croix 14 est placé sur l'axe polaire. Vis-à-vis des DAL connus, celui-ci assure une autre fonction : il refroidit le liquide au contact des ailettes. Ceci peut être obtenu en utilisant un alliage bon conducteur de la chaleur (aluminium ou cuivre) éventuellement complété par un caloduc (dont le fluide sera éventuellement le liquide à stocker). Un refroidissement du DAL est assuré par un cryoréfrigérateur H qui peut être du type Stirling, Joule Thomson ou à tube à gaz pulsé.

La fixation équatoriale s'effectue à l'aide d'une jupe tronconique 13 en matériau isolant.

Le puisage du liquide est situé à proximité du cryoréfrigérateur sur l'axe polaire. La surface libre du liquide en microgravité présente une forme torique et est repérée par la référence 16 (figure 8).

La figure 9 représente en coupe méridienne un autre mode de réalisation avec une fixation polaire 12. Les pôles sont donc plus chauds que le reste du réservoir. Deux jupes coniques 15 refroidies par un anneau équatorial 25, lui-même refroidi par le cryoréfrigérateur 11, assurent la fonction de DAL en imposant une surface libre de révolution 16 maintenant le centre de gravité du liquide près du centre du réservoir 1A.

La fixation polaire 12 est bien adaptée aux réservoirs comportant une section cylindrique.

Le réservoir 1A et son enveloppe externe 1B sont soumis aux vibrations de l'engin spatial, tel qu'un lanceur. La réponse élastique de la fixation (polaire ou équatoriale) induit un déplacement relatif entre l'enveloppe externe 1B et le réservoir interne 1A. La tête du cryoréfrigérateur 11 devant être montée d'une manière hermétique sur l'enveloppe externe 1B, il en résulterait des efforts excessifs sur la tête froide solidaire du réservoir interne 1A. Pour remédier à ce problème, on peut mettre en oeuvre un soufflet de découplage 44 entre le cryoréfrigérateur 11 et l'enveloppe externe 1B, tandis que la tête froide du cryoréfrigérateur 11 est solidaire du réservoir 1A. Le soufflet de découplage 44 permet un mouvement relatif entre le cryoréfrigérateur 11 et l'enveloppe externe 1B pendant les cycles thermiques et les vibrations (figure 4).

Dans le mode de réalisation des figures 4 et 8, le cryoréfrigérateur 11 refroidit le DAL 14 par conduction, ce qui assure la condensation des vapeurs à ce niveau, et donc le mouillage par le liquide. La partie la plus chaude de l'enveloppe du réservoir 1A est située sur l'équateur, le flux thermique étant conduit par la liaison mécanique 13. Ceci conduit à l'assèchement progressif de la partie de paroi 17 en fonction de la consommation de liquide.

La figure 5 montre un exemple de réalisation où la canalisation 25 joue aussi le rôle d'évaporateur. Une grille interne 26 assure la rétention du liquide qui s'évapore progressivement dans la zone 27. La bride équatoriale du réservoir externe 1B peut être chauffée par une résistance 29 pour assurer la vaporisation en cas de fort débit. Pour simplifier la figure 5, la bride est montrée à 90° de sa position réelle.

La grille interne 26 qui peut être une toile métallique, placée dans la ligne 25, permet le passage du liquide à la périphérie de la ligne, mais pas au centre, selon une disposition analogue à un caloduc. La fonction évaporateur est alors assurée par l'ensemble de la ligne 25, alors que dans le mode de réalisation de la figure 6, l'évaporateur est plus court et l'élément chauffant 29 est situé sous vide à l'extrémité axiale de l'évaporateur plutôt que sur la bride équatoriale.

## Revendications

1. Système de stockage de liquide cryogénique pour engin spatial comprenant au moins un réservoir de liquide (1A), **caractérisé en ce qu'**il comprend une enveloppe externe (1B), un espace sous vide ménagé entre le réservoir (1A) et l'enveloppe externe (1B), un dispositif d'acquisition de liquide (14 ; 15) en matériau bon conducteur de la chaleur et refroidi par un cryoréfrigérateur (11) pour localiser le liquide en microgravité à l'intérieur du réservoir (1A), une canalisation de remplissage (21) située en partie inférieure du réservoir (1A) lorsque celui-ci est au sol, et entourée d'une double paroi d'isolation sous vide et une canalisation de purge (22A) reliant le réservoir (1A) à l'enveloppe externe (1B) dont la longueur est au moins égale à la moitié du diamètre du réservoir (1A).

2. Système selon la revendication 1, **caractérisé en ce qu'**il comprend des moyens (12 ; 13) de maintien du réservoir (1A) dans l'enveloppe externe (1B), ces moyens de maintien (12 ; 13) présentant une faible conductivité thermique et étant écartés angulairement de 30° à 120° par rapport au dispositif d'acquisition de liquide (14 ; 15) refroidi par le cryoréfrigérateur (11).

3. Système selon la revendication 2, **caractérisé en ce que** le dispositif d'acquisition de liquide (14) est disposé sur un axe polaire du réservoir (1A) et **en ce que** lesdits moyens de maintien comprennent une jupe de fixation (13) en matériau isolant interposée au voisinage d'un plan équatorial entre les réservoirs (1A) et l'enveloppe externe (1B).

4. Système selon la revendication 2, **caractérisé en ce que** le dispositif d'acquisition de liquide (15) en forme de double tronc de cône solidaire d'un anneau refroidi par le cryoréfrigérateur (11) est disposé au voisinage d'un plan équatorial et **en ce que** lesdits moyens de maintien comprennent des organes de fixation mécanique (12) interposés au niveau d'un axe polaire entre le réservoir (1A) et l'enveloppe externe (1B).

5. Système selon l'une quelconque des revendications 1 à 4, **caractérisé en ce qu'**il comprend un matériau super-isolant (20) interposé entre le réservoir (1A) et l'enveloppe externe (1B).

6. Système selon l'une quelconque des revendications 1 à 5, **caractérisé en ce que** le réservoir de liquide (1A) et l'enveloppe externe (1B) sont montés dans un tube central (41) au voisinage du centre de gravité (43) de l'engin spatial.

7. Système selon l'une quelconque des revendications 1 à 6, **caractérisé en ce qu'**il comprend un soufflet de découplage (44) interposé entre le cryoréfrigérateur (11) et l'enveloppe externe (1B).

8. Système selon l'une quelconque des revendications 1 à 7, **caractérisé en ce qu'**il comprend un évaporateur (28) immergé dans le liquide du réservoir (1A) à l'endroit le plus proche du cryoréfrigérateur (11), lequel évaporateur (28) comprend un matériau poreux et est prolongé par un tube de faible section relié à l'enveloppe externe (1B).

9. Système selon l'une quelconque des revendications 1 à 7, **caractérisé en ce qu'**il comprend une canalisation (25) reliant le réservoir (1A) à l'enveloppe externe (1B), un tamis interne (26) formant évaporateur de liquide étant incorporé dans ladite canalisation (25).

10. Système selon la revendication 8 ou la revendication 9, **caractérisé en ce qu'**un élément chauffant (29) est associé à l'évaporateur (28 ; 26).

11. Système selon l'une quelconque des revendications 1 à 10, **caractérisé en ce qu'**il comprend un cryoréfrigérateur (11) comprenant une tête froide intégrée au réservoir (1A) au voisinage d'un orifice de puisage, le cryoréfrigérateur (11) étant relié à un radiateur (32) par une boucle de refroidissement (31).

12. Système selon l'une quelconque des revendications 1 à 10, **caractérisé en ce qu'**il comprend un cryoréfrigérateur (11) monté directement sur un radiateur (32) et relié au réservoir (1A) par un caloduc cryogénique (45).

13. Système selon la revendication 11 ou la revendication 12, **caractérisé en ce que** le cryoréfrigérateur (11) est du type stirling.

14. Système selon la revendication 11 ou la revendication 12, **caractérisé en ce que** le cryoréfrigérateur (11) est du type tube à gaz pulsé.

15. Système selon l'une quelconque des revendications 1 à 10, **caractérisé en ce qu'**il comprend un cryoréfrigérateur du type Joule Thomson avec un étage de détente disposé dans le réservoir (1A) et un compresseur déporté sur un radiateur de refroidissement (32).

16. Système selon l'une quelconque des revendications 1 à 15, **caractérisé en ce que** le liquide cryogénique stocké dans le réservoir (1A) est un gaz inerte liquéfié comprenant le xénon, le krypton, le néon ou l'argon pour l'alimentation de propulseurs électriques, plasmiques ou ioniques à grilles.

17. Système selon l'une quelconque des revendications 1 à 15, **caractérisé en ce que** le liquide cryogénique stocké dans le réservoir (1A) est de l'oxygène liquide.

18. Système selon l'une quelconque des revendications 1 à 17, **caractérisé en ce que** l'engin spatial est constitué par un satellite, une sonde automatique ou un véhicule spatial habité.

## Claims

1. A cryogenic liquid storage system for a spacecraft, the system comprising at least one liquid tank (1A), **characterized in that** it comprises an outer casing (1B), an evacuated space provided between the tank (1A) and the outer casing (1B), a propellant management device (14; 15) made of material that is a good conductor of heat and that is cooled by a cryorefrigerator (11) to localize the liquid inside the tank (1A) when in microgravity, and a filler pipe (21) situated in the portion of the tank (1A) that is at the bottom when the tank is on the ground, and that is surrounded by an evacuated insulating double wall and a purge pipe (22A) connecting the tank (1A) to the outer casing (1B) and presenting a length that is not less than half the diameter of the tank (1A).

2. A system according to claim 1, **characterized in that** it comprises means (12; 13) for holding the tank (1A) inside the outer casing (1B), these holder means (12; 13) presenting low thermal conductivity and being spaced apart angularly by 30° to 120° relative to the propellant management device (14; 15) that is cooled by the cryorefrigerator (11).

3. A system according to claim 2, **characterized in that** the propellant management device (14) is disposed on a polar axis of the tank (1A), and **in that** said holder means comprise a fastener skirt (13) of insulating material interposed in the vicinity of an equatorial plane between the tank (1A) and the outer casing (1B).

4. A system according to claim 2, **characterized in that** the propellant management device (15) in the form of two truncated cones secured to a ring that is cooled by the cryorefrigerator (11) is disposed in the vicinity of the equatorial plane, and **in that** said holder means comprise mechanical fastener members (12) interposed on a polar axis between the tank (1A) and the outer casing (1B).

5. A system according to anyone of claims 1 to 4, **characterized in that** it comprises super-insulating material (2a) interposed between the tank (1A) and the outer casing (1B).

6. A system according to anyone of claims 1 to 5, **characterized in that** the liquid tank (1A) and the outer casing (1B) are mounted in a central tube (41) in the vicinity of the center of gravity (43) of the spacecraft.

7. A system according to anyone of claims 1 to 6, **characterized in that** it comprises a decoupling bellows (44) interposed between the cryorefrigerator (11) and the outer casing (1B).

8. A system according to anyone of claims 1 to 7, **characterized in that** it comprises an evaporator (28) immersed in the liquid of the tank (1A) at the location closest to the cryorefrigerator (11), which evaporator (28) comprises a porous material and is extended by a tube of small section that is connected to the outer casing (1B).

9. A system according to anyone of claims 1 to 7, **characterized in that** it comprises a pipe (25) connecting the tank (1A) to the outer casing (1B), an inner screen (26) forming a liquid evaporator being incorporated in said pipe (25).

10. A system according to claim 8 or claim 9, **characterized in that** a heater element (29) is associated with the evaporator (28; 26).

11. A system according to anyone of claims 1 to 10, **characterized in that** it comprises a cryorefrigerator (11) having a cold head incorporated in the tank (1A) in the vicinity of a liquid takeoff opening, the cryorefrigerator (11) being connected to a radiator (32) by a cooling loop (31).

12. A system according to anyone of claims 1 to 10, **characterized in that** it comprises a cryorefrigerator (11) which is mounted directly on a radiator (32) and which is connected to the tank (1A) by a cryogenic heat pipe (45).

13. A system according to claim 11 or claim 12, **characterized in that** the cryorefrigerator (11) is of the Stirling type.

14. A system according to claim 11 or claim 12, **characterized in that** the cryorefrigerator (11) is of the pulsed gas tube type.

15. A system according to anyone of claims 1 to 10, **characterized in that** it comprises a cryorefrigerator of the Joule Thomson type with an expansion stage located in the tank (1A) and a compressor offset to a cooling radiator (32).

16. A system according to anyone of claims 1 to 15, **characterized in that** the cryogenic liquid stored in the tank (1A) is a liquefied inert gas comprising xenon, krypton, neon, or argon for feeding gridded plasma or ion electric thrusters.

17. A system according to anyone of claims 1 to 15, **characterized in that** the cryogenic liquid stored in the tank (1A) is liquid oxygen.

18. A system according to anyone of claims 1 to 17, **characterized in that** the spacecraft is constituted by a satellite, an automatic probe or an inhabited spacecraft.

## Patentansprüche

1. System zur Lagerung von Kryoflüssigkeit für ein Raumfahrzeug, umfassend wenigstens einen Flüssigkeitsbehälter (1A), **dadurch gekennzeichnet, daß** es einen Außenmantel (1 B), einen zwischen dem Behälter (1A) und dem Außenmantel (1 B) ausgebildeten Vakuumraum, eine aus einem gut wärmeleitenden Material bestehende und durch eine Tiefsttemperaturkälteanlage (11) gekühlte Flüssigkeitsaufnahmevorrichtung (14; 15), um die Flüssigkeit unter Mikroschwerkraft innerhalb des Behälters (1A) einzugrenzen, eine Füllrohrleitung (21), die im unteren Teil des Behälters (1A) gelegen ist, wenn sich dieser am Boden befindet, und die von einer doppelten Vakuumisolationswandung umgeben ist, sowie eine den Behälter (1A) mit dem Außenmantel (1 B) verbindende Entleerungsrohrleitung (22A) umfaßt, deren Länge wenigstens gleich der Hälfte des Durchmessers des Behälters (1A) ist.

2. System nach Anspruch 1, **dadurch gekennzeichnet, daß** es Mittel (12; 13) zum Halten des Behälters (1A) in dem Außenmantel (1B) umfaßt, wobei diese Haltemittel (12; 13) eine geringe Wärmeleitfähigkeit aufweisen und gegenüber der durch die Tiefsttemperaturkälteanlage (11) gekühlten Flüssigkeitsaufnahmevorrichtung (14; 15) um 30° bis 120° winkelmäßig beabstandet sind.

3. System nach Anspruch 2, **dadurch gekennzeichnet, daß** die Flüssigkeitsaufnahmevorrichtung (14) auf einer Polarachse des Behälters (1A) angeordnet ist und daß die Haltemittel eine Befestigungsschürze (13) aus Isoliermaterial umfassen, die in der Nähe einer Äquatorialebene zwischen den Behältern (1A) und dem Außenmantel (1B) eingefügt ist.

4. System nach Anspruch 2, **dadurch gekennzeichnet, daß** die doppelkegelstumpfförmige Flüssigkeitsaufnahmevorrichtung (14), die mit einem durch die Tiefsttemperaturkälteanlage (11) gekühlten Ring fest verbunden ist, in der Nähe einer Äquatorialebene angeordnet ist und daß die Haltemittel Organe zur mechanischen Befestigung (12) umfassen, die im Bereich einer Polarachse zwischen dem Behälter (1A) und dem Außenmantel (1 B) eingefügt sind.

5. System nach einem der Ansprüche 1 bis 4, **dadurch gekennzeichnet, daß** es ein Superisolationsmaterial (20) umfaßt, das zwischen dem Behälter (1A) und dem Außenmantel (1 B) eingefügt ist.

6. System nach einem der Ansprüche 1 bis 5, **dadurch gekennzeichnet, daß** der Flüssigkeitsbehälter (1A) und der Außenmantel (1B) in einem mittleren Rohr (41) in der Nähe des Schwerpunktes (43) des Raumfahrzeugs angebracht sind.

7. System nach einem der Ansprüche 1 bis 6, **dadurch gekennzeichnet, daß** es einen Entkopplungsbalg (44) umfaßt, der zwischen der Tiefsttemperaturkälteanlage (11) und dem Außenmantel (1 B) eingefügt ist.

8. System nach einem der Ansprüche 1 bis 7, **dadurch gekennzeichnet, daß** es einen Verdampfer (28) umfaßt, der an der der Tiefsttemperaturkälteanlage (11) nächstgelegenen Stelle in die Flüssigkeit des Behälters (1A) eingetaucht ist, wobei der Verdampfer (28) ein poröses Material aufweist und durch ein Rohr mit geringem Querschnitt, das mit dem Außenmantel (1 B) verbunden ist, fortgesetzt ist.

9. System nach einem der Ansprüche 1 bis 7, **dadurch gekennzeichnet, daß** es eine den Behälter (1A) mit dem Außenmantel (1 B) verbindende Rohrleitung (25) umfaßt, wobei ein einen Flüssigkeitsverdampfer bildendes Innensieb (26) in die Rohrleitung (25) eingesetzt ist.

10. System nach Anspruch 8 oder Anspruch 9, **dadurch gekennzeichnet, daß** dem Verdampfer (28; 26) ein Heizelement (29) zugeordnet ist.

11. System nach einem der Ansprüche 1 bis 10, **dadurch gekennzeichnet, daß** es eine Tiefsttemperaturkälteanlage (11) umfaßt, die einen kalten Kopf aufweist, der in der Nähe einer Entnahmeöffnung in den Behälter (1A) integriert ist, wobei die Tiefsttemperaturkälteanlage (11) über eine Kühlschleife (31) mit einem Kühler (32) verbunden ist.

12. System nach einem der Ansprüche 1 bis 10, **dadurch gekennzeichnet, daß** es eine Tiefsttemperaturkälteanlage (11) umfaßt, die direkt an einem Kühler (32) angebracht und über ein kryogenes Wärmeleitrohr (45) mit dem Behälter (1A) verbunden ist.

13. System nach Anspruch 11 oder Anspruch 12, **dadurch gekennzeichnet, daß** die Tiefsttemperaturkälteanlage (11) vom Typ Stirling-Kühler ist.

14. System nach Anspruch 11 oder Anspruch 12, **dadurch gekennzeichnet, daß** die Tiefsttemperaturkälteanlage (11) vom Typ Pulsröhrenkühler ist.

15. System nach einem der Ansprüche 1 bis 10, **dadurch gekennzeichnet, daß** es eine Tiefsttemperaturkälteanlage vom Typ Joule-Thomson-Kühler mit einer in dem Behälter (1A) angeordneten Entspannungsstufe und einem an einen Kühler (32) verlagerten Kompressor umfaßt.

16. System nach einem der Ansprüche 1 bis 15, **dadurch gekennzeichnet, daß** die in dem Behälter (1A) gelagerte Kryoflüssigkeit ein verflüssigtes Inertgas, umfassend Xenon, Krypton, Neon oder Argon, für die Versorgung von elektrischen Triebwerken, Plasmatriebwerken oder lonentriebwerken mit Gittern ist.

17. System nach einem der Ansprüche 1 bis 15, **dadurch gekennzeichnet, daß** die in dem Behälter (1A) gelagerte Kryoflüssigkeit flüssiger Sauerstoff ist.

18. System nach einem der Ansprüche 1 bis 17, **dadurch gekennzeichnet, daß** das Raumfahrzeug von einem Satelliten, einer automatischen Sonde oder einem bemannten Raumfahrzeug gebildet ist.
